# EUROPEAN PATENT APPLICATION

(11) **EP 1 657 112 A2**
(43) Date of publication of application: **17.05.2006**
(21) Application number: 05090301.2
(22) Date of filing: 01.11.2005
(51) Int. Cl.: B60R 7/04

(54) **Storage devices**

(30) Priority: 10.11.2004 JP 2004326162; 30.11.2004 JP 2004346263
(71) Applicant: Kojima Press Industry Co., Ltd., Toyota-shi, Aichi-ken (JP)
(72) Inventor: Nishimura, Seiichi Kojima Press Industry Co., Ltd, Toyota-shi, Aichi-ken (JP)
(74) Representative: Baumgärtel, Gunnar

(57) **Abstract**

Storage devices (1, 1', 1") are taught that comprises a base member (10), a storage member (20) movably disposed in a cavity of the base member (10) so as to move between a closed position and an open position, and a lock mechanism (30) having an operation unit (32) provided in the base member (10) and an engagement portion (24) provided in the storage member. The operation unit is disposed on a reverse side of the base member and includes a latch member (40) that can move between an advanced position and a retreated position in response to the closing and opening operation of the storage member (20). The latch member (40) is arranged and constructed to move to the advanced position so as to engage the engagement portion (24) of the storage member (20) only when the storage member (40) is in the closed position.

## Description

The present invention relates to storage devices, e.g., overhead consoles, cup holders, ash trays or other such devices, that are used in a vehicle.

A known storage device is taught, for example, by Japanese Laid-Open Patent Publication Number 11-245773, in which an overhead console is exemplified as the storage device. In this known art, the overhead console includes a base member or casing and a storage member or box. The casing is designed to be attached to a vehicle roof or a ceiling of a vehicle cabin. The box is pivotally connected to the casing so as to be closed and opened. The box is designed to receive small articles such as eyeglasses. The overhead console includes a lock mechanism that can retain the box in a closed position. The lock mechanism includes a cam pin that is attached to the casing and a cam member (or a heart cam) that is fixed to the box. When the box is closed, the cam pin and the cam member engage with each other so that the lock mechanism is locked. As a result, the box is retained in the closed position. The lock mechanism can be unlocked by simply pushing the box into the casing. That is, when the box is pushed into the casing, the cam pin is disengaged from the cam member so that the lock mechanism can be unlocked. As a result, the box can be rotated toward an open position.

In this known overhead console, the cam pin and the cam member can be effectively concealed when the box is in the closed position. Therefore, the overhead console may have a good appearance when the box is closed. However, the cam pin and the cam member can be exposed when the box is in an opened position. Therefore, the overhead console may have an inferior appearance when the box is opened.

Further, a different type of known overhead console is taught, for example, by Japanese Laid-Open Patent Publication Number 8-230561. The overhead console of this known art has substantially the same construction as the above-described overhead console except that an illuminating device is provided thereto. The illuminating device includes a lighting device or lamp, and a lighting switch. The lighting switch is arranged and constructed to be switched off and on so that the lamp can be turned off and on when the box is closed and opened.

In this known overhead console, the cam pin, the cam member, and the lighting switch, can be effectively concealed when the box is in the closed position. Therefore, this overhead console may have an attractive appearance when the box is closed. However, these members can be exposed when the box is in an opened position. Therefore, the overhead console may have an inferior appearance when the box is opened.

It is, accordingly, one object of the present teachings to provide improved storage devices.
For example, in one embodiment of the present teachings, storage devices are taught that comprise a base member, a storage member movably disposed in a cavity of the base member so as to move between a closed position and an open position, and a lock mechanism having an operation unit provided in the base member and an engagement portion provided in the storage member. The operation unit is disposed on a reverse side of the base member and includes a latch member that can move between an advanced position and a retreated position in response to the closing and opening operation of the storage member. The latch member is arranged and constructed to move to the advanced position so as to engage the engagement portion of the storage member only when the storage member is in the closed position.

In such storage devices, even when the storage member is opened, the lock mechanism can be substantially concealed. Therefore, the storage devices may have a good appearance even when a storage member is opened.

In another embodiment of the present teachings, the storage devices further include an illuminating device having a lighting source attached to the base member and a lighting switch disposed on the reverse side of the base member. The lighting switch is arranged and constructed to be switched off and on in response to the closing and opening operation of the storage member.

In such modified storage devices, even when a storage member is opened, the lighting switch as well as the lock mechanism can be substantially concealed. Therefore, the modified storage devices may also have a good appearance even when a storage member is opened.

Other objects, features and advantages of the present invention will be readily understood after reading the following detailed description together with the accompanying drawings and the claims.

FIG. 1 is a perspective view of an overhead console according to a first embodiment of the present teachings, in which the overhead console is viewed from a side corresponding to an outer panel of a vehicle roof;
FIG. 2 is a cross-sectional view taken along line II-II shown in FIG. 1;
FIG. 3 is a partially enlarged view of FIG. 2, illustrating a condition in which a box is closed and in which a lock mechanism is locked;
FIG. 4 is a view similar to FIG. 3, illustrating a condition in which the box is pushed into a casing in order to open the box and in which the lock mechanism is unlocked;
FIG. 5 is a view similar to FIG. 3, illustrating a condition in which the box is opened and in which the lock mechanism remains unlocked;
FIG. 6 is an exploded perspective view of an operation unit of the lock mechanism;
FIG. 7 is a partially enlarged elevational view of a cam member provided in a slider member of the operation unit;
FIG. 8 is a view similar to FIG. 3, illustrating an overhead console according to a second embodiment of the present teachings;
FIG. 9 is an exploded perspective view of an operation unit of a lock mechanism;
FIG. 10 is a perspective view of an overhead console according to a third embodiment of the present teachings, in which the overhead console is viewed from a side corresponding to an outer panel of a vehicle roof;
FIG. 11 is a cross-sectional view taken along line XI-XI shown in FIG. 10;
FIG. 12 is a partially enlarged view of FIG. 11, illustrating a condition in which a box is closed and in which a lock mechanism is locked;
FIG. 13 is a view similar to FIG. 12, illustrating a condition in which the box is pushed into a casing in order to open the box and in which the lock mechanism is unlocked;
FIG. 14 is a view similar to FIG. 12, illustrating a condition in which the box is opened and in which the lock mechanism remains unlocked; and
FIG. 15 is an exploded perspective view of an operation unit of the lock mechanism.

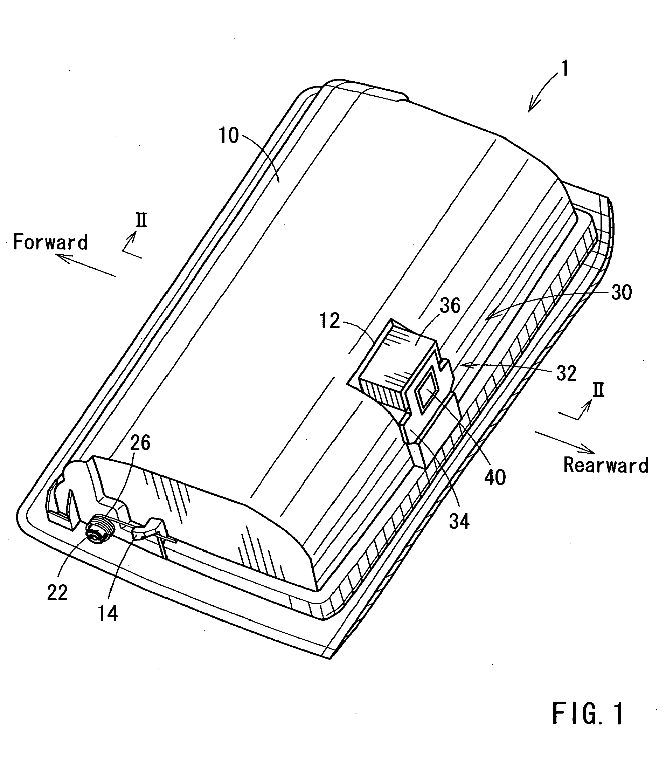

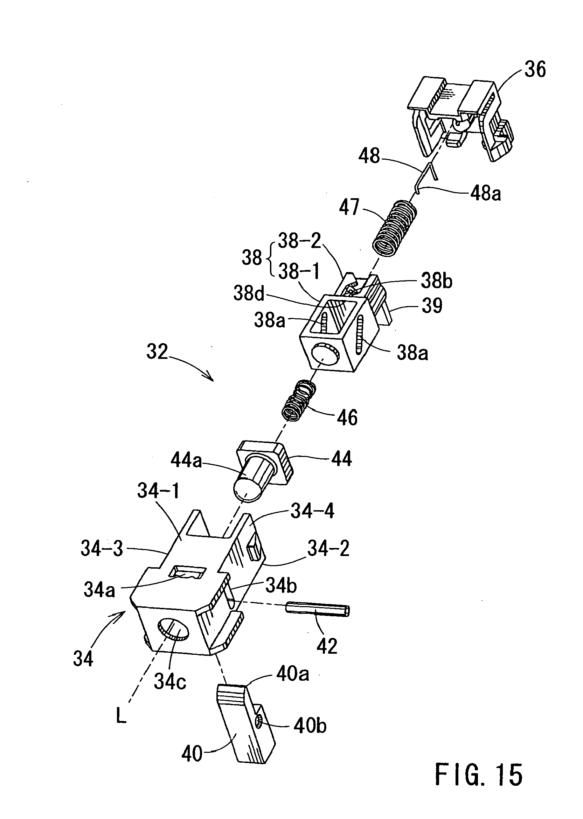

Three detailed representative embodiments of the present teachings will now be described in detail with reference to FIGS. 1 to 15. An overhead console 1, 1' and 1" will be exemplified as a representative storage device of the present teachings.

### First Detailed Representative Embodiment

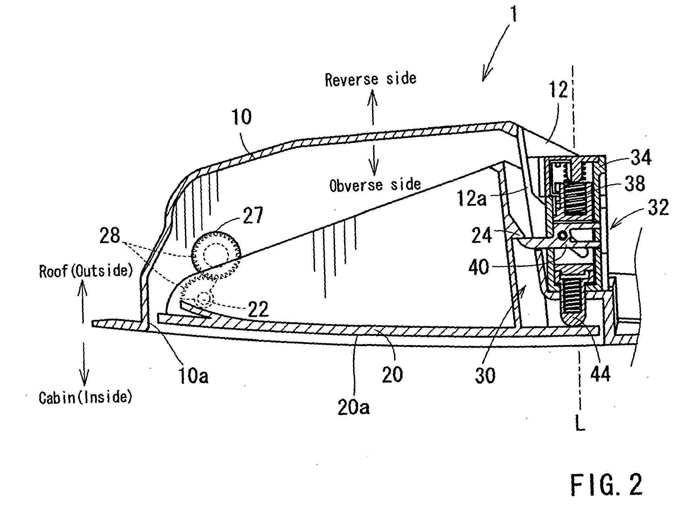

The first detailed representative embodiment will now be described with reference to FIGS. 1 to 7. As shown in FIG. 1, the representative overhead console 1 may include a base member or casing 10 and a storage member or box 20 (FIG. 2). The casing 10 is designed to be attached to an inner panel of a vehicle roof (or a ceiling panel of a vehicle cabin), (not shown). The casing 10 has an opening 10a that is arranged and constructed to face the vehicle cabin (i.e., face to an inside of the roof inner panel) when the casing 10 is attached to the roof inner panel. The casing 10 may preferably be designed such that the opening 10a thereof may be coplanar with the ceiling panel of the vehicle cabin when the casing 10 is attached to the roof inner panel. Further, the casing 10 may preferably be integrally formed by resin molding. The box 20 is pivotally disposed in a cavity (an obverse side) of the casing 10 so as to pivot between a closed position and an open position via the opening 10a. Typically, the box 20 may preferably be designed such that a lower or outer surface 20a thereof may be coplanar with a roof inner panel surface (or a ceiling surface) when the box 20 is in the closed position. The box 20 may preferably be designed to receive small articles such as eyeglasses (not shown). Similar to the casing 10, the box 20 may preferably be integrally formed by resin molding.

Generally, the casing 10 may be provided with an extension (not shown) that extends rearwardly (i.e., rightwardly in FIGS. 1 and 2). The extension may generally be provided with attachments for a room lamp, a spot light or other such devices.

The casing 10 is provided with a pair of rotatable pivot pins 22 at both ends thereof. The pivot pins 22 are disposed along a front side (i.e., a left side in FIGS. 1 and 2). The pivot pins 22 are coupled to the box 20 so that the box 20 can move or rotate upwardly and downwardly via the pivot pins 22. As shown in FIG. 1, one of the pivot pins 22 is provided with a torsion spring 26. One end of the torsion spring 26 is affixed to one of pivot pins 22. The other end of the torsion spring 26 engages an engagement strip 14 that is formed in the casing 10. Therefore, the box 20 may normally be biased toward the open position via the spring force of the torsion spring 26. Conversely, as shown in FIG. 2, the other of the pivot pins 22 is coupled to a gear unit 28. The gear unit 28 engages an energy absorber or damper 27 that is attached to the casing 10 so that the other of the pivot pins 22 can be rotationally dampened (i.e., subjected to a rotational resistance). Therefore, the box 20 can be consistently rotated upwardly and downwardly (closed and opened) at a proper speed.

The overhead console 1 may further include a lock mechanism 30 so that the box 20 can be locked or retained in the closed position. The lock mechanism 30 is positioned at a mid-section of a rear side (i.e., a right side in FIGS. 1 and 2) of the casing 10. The lock mechanism 30 is composed of an operation unit 32 and an engagement portion 24. The operation unit 32 is attached to an attachment portion 12 (FIG. 2) that is formed in a reverse side of the casing 10. As will be apparent, the attachment portion 12 is formed as a recessed portion that opens toward an outer panel of the vehicle roof (not shown). Conversely, the engagement portion 24 is integrally formed in the box 20 so as to correspond to the attachment portion 12 of the casing 10 when the box 20 is closed. Further, in this embodiment, the engagement portion 24 is formed as a protrusion. However, the engagement portion 24 can be formed as a recess or a through hole, if necessary.

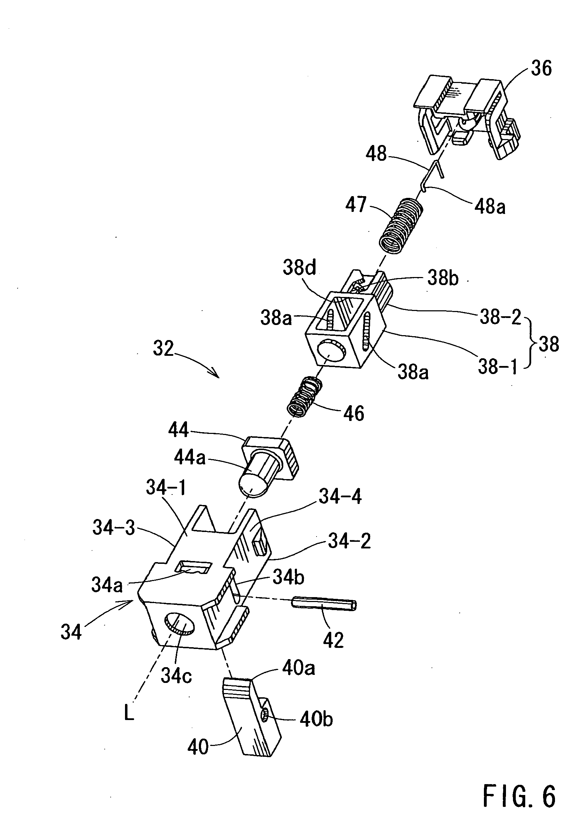

As best shown in FIG. 6, the operation unit 32 includes a housing 34 having an upper opening. The operation unit 32 further includes an actuator or pusher 44 having a downwardly projecting shaft portion 44a, a first compression spring 46, a slider member 38, a second compression spring 47 and a cam pin 48 that are received in the housing 34 in this order. Also, the operation unit 32 additionally includes a cap 36 in order to close the upper opening of the housing 34. The pusher 44 and the slider member 38 are arranged and constructed to move along a vertical axis L of the housing 34. The first spring 46 is disposed between the pusher 44 and the slider member 38. Therefore, the pusher 44 is normally biased downwardly by means of the first spring 46. Also, the slider member 38 is normally biased upwardly by means of the first spring 46. The second spring 47 is disposed between the slider member 38 and the cap 36. Therefore, the slider member 38 is normally biased downwardly by means of the second spring 47. However, the second spring 47 has a spring force greater than the spring force of the first spring 46. Therefore, the first spring 46 cannot move the slider member 38 upwardly against the force of the second spring 47. As a result, the first spring 46 may function solely for biasing the pusher 44 downwardly.

As best shown in FIG. 6, the housing 34 has front and rear walls 34-1 and 34-2 (i.e., walls perpendicular to a longitudinal direction of a vehicle) each of which is formed with a laterally elongated slot 34a. Also, the housing 34 has right and left walls 34-3 and 34-4 (i.e., walls parallel to a longitudinal direction of the vehicle) each of which is formed with a laterally elongated slot 34b. Further, the housing 34 has a bottom wall that is formed with a through hole 34c. As will be recognized, the through hole 34c is arranged and constructed to movably receive the pusher shaft portion 44a.

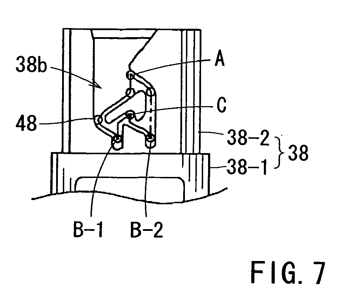

As best shown in FIG. 6, the slider member 38 is composed of a lower rectangular box-shaped portion 38-1 and an upper recessed portion 38-2 that is arranged and constructed to receive the second spring 47. The lower portion 38-1 of the slider member 38 has a lateral through bore 38d that extends along the longitudinal direction of the vehicle so as to correspond to the slots 34a of the housing 34. Also, the lower portion 38-1 of the slider member 38 is formed with a pair of inclined cam slots 38a corresponding to the slots 34b of the housing 34. Further, the upper portion 38-2 of the slider member 38 is provided with a cam member 38b that is arranged to face the front wall 34-1 of the housing 34. As best shown in FIG. 7, the cam member 38b may preferably be a heart cam.

The cam pin 48 is fixedly connected to the cap 36. As will be apparent from the drawings, the cam pin 48 has a downwardly extending distal end 48a that engages the cam member 38b of the slider member 38.

In addition, the operation unit 32 includes a latch member or latch bar 40 and a guide pin 42. The latch bar 40 has an engagement projection 40a and a pin insertion bore 40b. The latch bar 40 is inserted into the through bore 38d of the slider member 38. Further, the latch bar 40 movably engages the slots 34a of the housing 34 at both ends in a manner that the engagement projection 40a projects outwardly from the housing front wall 34-1. The guide pin 42 is fitted into the pin insertion bore 40b of the latch bar 40. The guide pin 42 thus attached to the latch bar 40 is inserted into the cam slot 38a of the slider member 38. Further, the guide pin 42 movably engages the slots 34b of the housing 34 at both ends. Thus, the latch bar 40 can reciprocate in directions perpendicular to the front and rear walls 34-1 and 34-2 of the housing 34 (i.e., forward and rearward directions perpendicular to the vertical axis L of the housing 34) depending upon the sliding motion of the slider member 38.

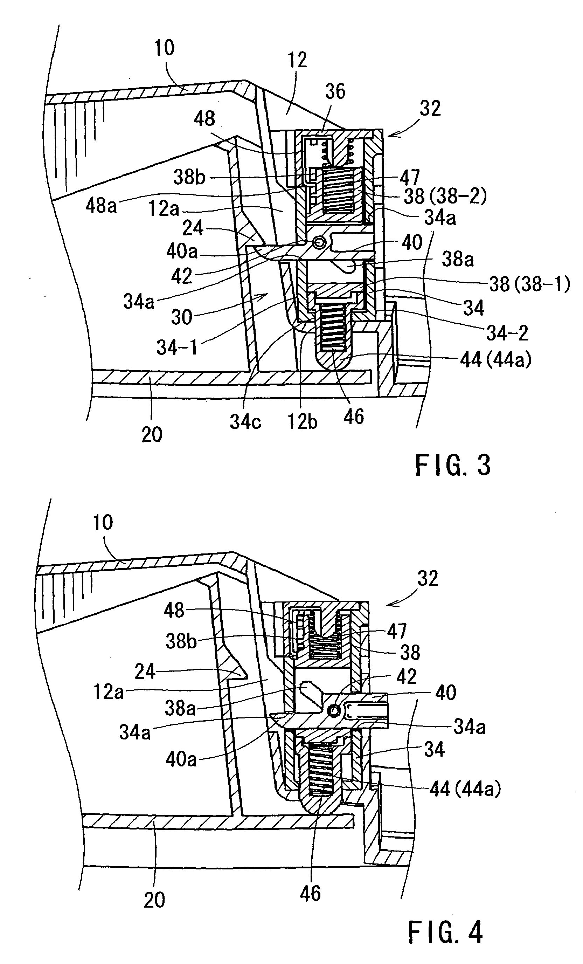

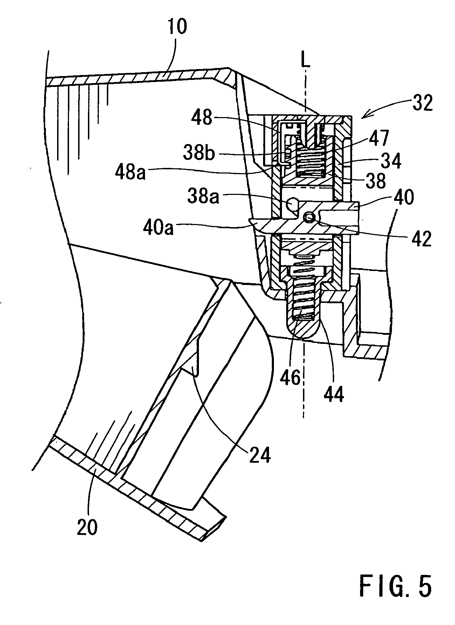

As shown in, for example, FIGS. 2 and 3, when the operation unit 32 is assembled, the pusher shaft portion 44a is projected outwardly (downwardly) from the housing 34 via the through hole 34c. Also, the engagement projection 40a of the latch bar 40 is projected forwardly (outwardly) from the housing 34 via the slot 34a. Further, when the operation unit 32 thus assembled is attached to the attachment portion 12 formed in the casing 10, the pusher shaft portion 44a projected from the housing 34 is projected into the cavity of the casing 10 regardless of the position of the pusher 44 via a through bore 12b formed in the attachment portion 12. Conversely, unlike the pusher shaft portion 44a, the engagement projection 40a of the latch bar 40 is projected into or retracted from the cavity of the casing 10 depending upon the position of the latch bar 40. That is, as shown in FIG. 3, when the latch bar 40 is advanced or shifted forwardly, the engagement projection 40a of the latch bar 40 may be projected into the cavity of the casing 10 via a through bore 12a formed in the attachment portion 12. To the contrary, as shown in FIGS. 4 and 5, when the latch bar 40 is retreated or shifted rearwardly, the engagement projection 40a of the latch bar 40 may be retracted within the reverse side of the casing 10 via the through bore 12a.

As shown in FIG. 7, the cam member (the heart cam) 38b may preferably be formed as a specially shaped cam groove having different positions A, B-1, C, and B-2. As will be recognized, when the slider member 38 moves along the vertical axis L of the housing 34, the distal end 48a of the cam pin 48 relatively moves along the cam member 38b of the slider member 38. That is, when the slider member 38 vertically reciprocates within the housing 34, the distal end 48a of the cam pin 48, for example, starts from a position A, and moves via positions B-1, C and B-2, and returns to the position A.

As will be described hereinafter, when the slider member 38 is in a first or lowermost position in the housing 34 (FIGS. 2 and 3), the distal end 48a of the cam pin 48 may be positioned in the position A in the cam member 38b. Also, when the slider member 38 is in a second or upper position (FIG. 5), the distal end 48a of the cam pin 48 may be positioned in the position C in the cam member 38b. Further, when the slider member 38 is in a third or uppermost position, i.e., a full stroke position beyond the upper position (FIG. 4), the distal end 48a of the cam pin 48 may be positioned in the position B-1 or the position B-2 in the cam member 38b.

Locking and unlocking operation of the lock mechanism 30 (the operation unit 32) described according to this embodiment (i.e., opening and closing operation of the box 20) will now be described with reference to FIGS. 2 to 5.
FIGS. 2 and 3 show a locking condition of the lock mechanism 30, in which the lock mechanism 30 is locked. In the locking condition of the lock mechanism 30, the slider member 38 is urged to the lowermost position by the spring force of the second spring 47 so that the distal end 48a of the cam pin 48 is in the position A (FIG. 7) in the cam member 38b. At this time, the guide pin 42 attached to the latch bar 40 is positioned in an uppermost position in the cam slot 38a of the slider member 38. Also, the guide pin 42 is positioned in a forwardmost position in the slots 34b of the housing 34. As a result, the latch bar 40 is in an advanced position so that the engagement projection 40a thereof engages the engagement portion 24 formed in the box 20. Thus, the box 20 can be retained in the closed position.

In order to unlock the lock mechanism 30 (i.e., in order to open the box 20), the box 20 is pushed into the casing 10. As shown in FIG. 4, when the box 20 is pushed by applying a desired pushing force thereto, the pusher 44 (the pusher shaft portion 44a) of the operation unit 32 moves upwardly so that the slider member 38 slides upwardly. As a result, the slider member 38 is shifted to the uppermost position so that the distal end 48a of the cam pin 48 moves from the position A to the position B-1 (FIG. 7) in the cam member 38b. At this time, the guide pin 42 attached to the latch bar 40 is shifted to a lowermost position in the cam slot 38a of the slider member 38. Also, the guide pin 42 is shifted to a rearwardmost position in the slots 34b of the housing 34. As a result, the latch bar 40 moves to a fully retreated position so that the engagement projection 40a thereof is disengaged from the engagement portion 24 formed in the box 20. Thus, the lock mechanism 30 is unlocked.

As shown in FIG. 5, when the pushing force applied to the box 20 is released, the slider member 38 is shifted downwardly by the spring force of the second spring 47. At the same time, the pusher 44 moves downwardly by the spring force of the first spring 46 so that the pusher shaft portion 44a may be projected downwardly from the casing 10 via a through bore 12b formed in the attachment portion 12. When the slider member 38 moves downwardly, the distal end 48a of the cam pin 48 moves from the position B-1 to the position C (FIG. 7) in the cam member 38b so as to be retained in the position C. As a result, the slider member 38 can be retained in the upper position. At this time, the guide pin 42 attached to the latch bar 40 is shifted to and retained in a middle position in the cam slot 38a of the slider member 38. Also, the guide pin 42 is shifted to a middle position in the slots 34b of the housing 34. As a result, the latch bar 40 is moved to and retained in a retreated position so as to be prevented from projecting toward the advanced position. Therefore, the engagement projection 40a of the latch bar 40 can be retracted within the reverse side of the casing 10. Thus, the lock mechanism 30 is retained in an unlocking condition. Therefore, the box 20 can be opened by simply releasing the pushing force applied thereto.

In order to again close the box 20 (in order to relock the lock mechanism 30), the box 20 is again pushed into the casing 10 by applying a desired pushing force thereto. When the box 20 is pushed upward, as shown in FIG. 4, the pusher 44 (the pusher shaft portion 44a) of the operation unit 32 moves upwardly so that the slider member 38 again slides upwardly. As a result, the slider member 38 is again shifted to the uppermost position so that the distal end 48a of the cam pin 48 moves from the position C to the position B-2 (FIG. 7) in the cam member 38b. At this time, the guide pin 42 attached to the latch bar 40 is shifted to the lowermost position in the cam slot 38a of the slider member 38. Also, the guide pin 42 is shifted to the rearwardmost position in the slots 34b of the housing 34. As a result, the latch bar 40 moves to the fully retreated position.

Thereafter, the pushing action against the box 20 is stopped by releasing the pushing force applied thereto. Consequently, as shown in FIG. 3, the slider member 38 moves downwardly by the spring force of the second spring 47 so as to be retained in the lowermost position. At this time, the pusher 44 also moves downwardly so that the pusher shaft portion 44a may be projected downwardly from the casing 10 via the through bore 12b formed in the attachment portion 12. When the slider member 38 moves to the lowermost position, the distal end 48a of the cam pin 48 moves from the position B-2 to the position A (FIG. 7) in the cam member 38b. At this time, the guide pin 42 attached to the latch bar 40 is shifted to and retained in the uppermost position in the cam slot 38a of the slider member 38. Also, the guide pin 42 is shifted to the forwardmost position in the slots 34b of the housing 34. As a result, the latch bar 40 is moved to and retained in the advanced position so that the engagement projection 40a thereof again engages the engagement portion 24 formed in the box 20. Thus, the lock mechanism 30 can be relocked so that the box 20 can be retained in the closed position.

According to the present embodiment, even when the box 20 is opened (FIG. 5), the lock mechanism 30 can substantially be concealed except for the engagement portion 24 formed in the box 20 and the pusher shaft portion 44a of the operation unit 32 because the operation unit 32 is positioned in the reverse side of the casing 10. Therefore, the overhead console 1 may have a good appearance even when the box 20 is opened.

Also, as described above, when the box 20 is opened (FIG. 5), the engagement projection 40a of the latch bar 40 may be retracted into the reverse side of the casing 10. Therefore, the engagement projection 40a of the latch bar 40 can be reliably prevented from interfering with the engagement portion 24 formed in the box 20 when the box 20 is shut. As a result, the box 20 can be smoothly closed without generating unnecessary noise.

Further, when the box 20 is closed (FIGS. 2 and 3), the box 20 is urged downwardly (toward the open position thereof) via the pusher shaft portion 44a that is applied with the spring force of the first spring 46. Therefore, the closed box 20 can be reliably prevented from vibrating without providing additional vibration absorbing members (e.g., vibration absorbing springs) to the casing 10. This may also contribute to improving the appearance of the overhead console 1.

### Second Detailed Representative Embodiment

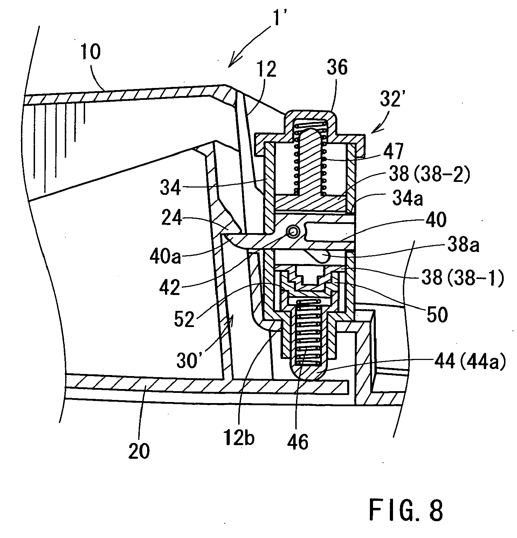

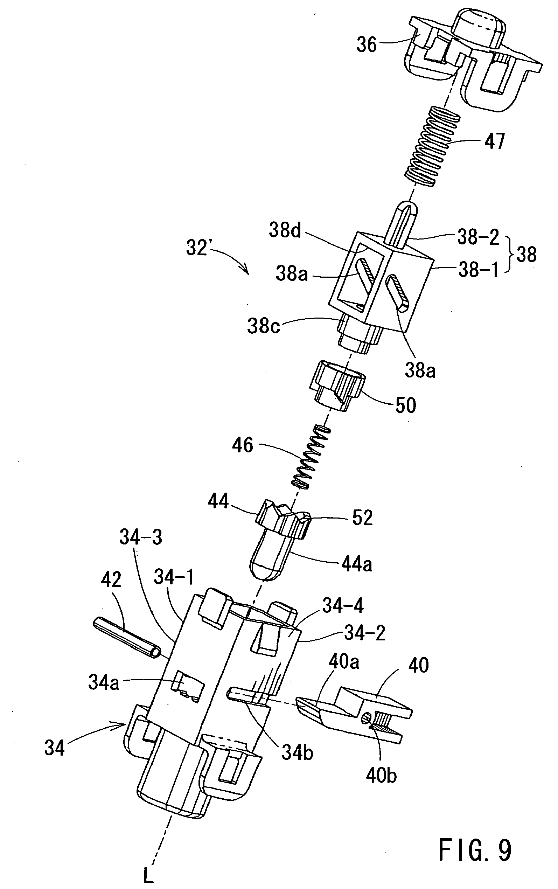

The second detailed representative embodiment will now described with reference to FIGS. 8 and 9. Because the second embodiment relates to the first embodiment, only constructions and elements that are different from the first embodiment will be explained in detail. Elements that are the same in the first and second embodiments will be identified by the same reference numerals and the detailed description of such elements will be omitted.

An overhead console 1' of this embodiment includes a lock mechanism 30' that has an operation unit 32'. In the operation unit 32', the cam member 38b and the cam pin 48 that are used in the operation unit 32 of the first embodiment are respectively replaced with a rotary cam assembly that has a rotor 50 and a circular cam 52. The rotor 50 has a cam surface and is axially rotatably attached to a cylindrical retainer portion 38c that is formed in the lower portion 38-1 of the slider member 38. The retainer portion 38c is positioned in a lower surface of the lower portion 38-1 so as to be coaxial with the vertical axis L of the housing 34. Conversely, the circular cam 52 is formed in the pusher 44 so as to project upwardly therefrom. The circular cam 52 has a cam surface that is engageable with the cam surface of the rotor 50. Further, the first spring 46 is disposed between the pusher 44 and the rotor 50.

In this structure, when the pusher 44 moves vertically, the rotor 50 may rotate due to engagement of the cam surfaces of the rotor 50 and the circular cam 52 so that the slider member 38 can move vertically. As a result, similar to the first embodiment, the latch bar 40 is advanced and retreated so that the engagement projection 40a thereof can engage or be disengaged from the engagement portion 24 formed in the box 20. Thus, the lock mechanism 30 can be locked and unlocked so that the box 20 can be closed and opened.

### Third Detailed Representative Embodiment

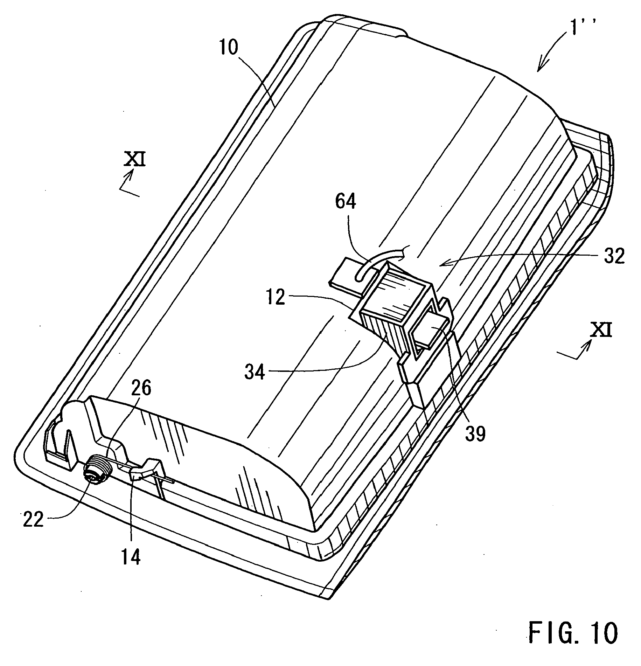

The third detailed representative embodiment will now described with reference to FIGS. 10-15. Because the third embodiment relates to the first embodiment, only constructions and elements that are different from the first embodiment will be explained in detail. Elements that are the same in the first and third embodiments will be identified by the same reference numerals and detailed description of such elements will be omitted.

An overhead console 1" of this embodiment includes an illuminating device that has a lighting source or lamp 60 and a corresponding lighting switch assembly 61. The lamp 60 may preferably be, but is not limited to, an LED, a light bulb, a fluorescent lamp or other such illuminants. The lighting switch assembly 61 is composed of a lighting switch 62 having a push button 62a and a pusher member 39. The lighting switch 62 is an alternately acting-type lighting switch that can be alternately switched on and off when the push button 62a is pushed.

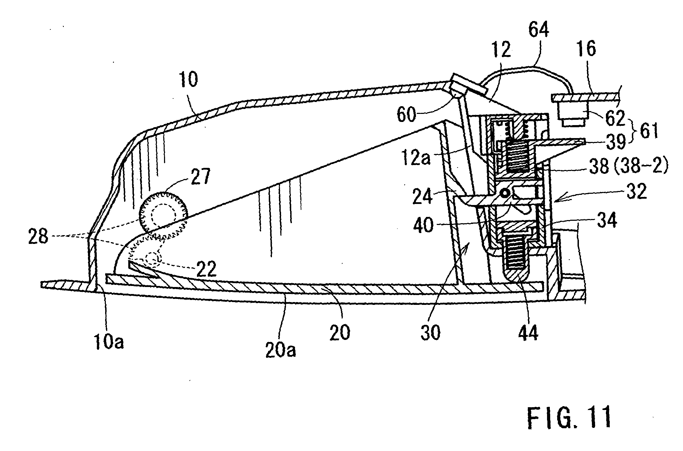

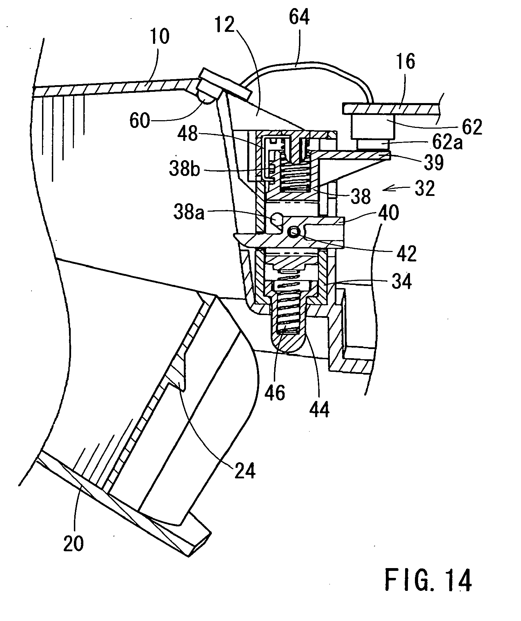

As shown in FIGS. 11-14, the lamp 60 is attached to the casing 10 so as to face the cavity of the casing 10. Typically, the lamp 60 may be directed to the opening 10a of the casing 10 so as to illuminate the cavity of the box 20 when the box 20 is opened (FIG. 14).

As shown in FIGS. 11-14, the lighting switch 62 of the lighting switch assembly 61 is attached to a lower surface of a switch retainer plate 16 so that the push button 62a is directed downwardly. Further, the switch retainer plate 16 extends from the extension (not shown) formed in the casing 10 toward the attachment portion 12 of casing 10. As will be appreciated, the switch retainer plate 16 is positioned within the reverse side of the casing 10.

The pusher member 39 of the lighting switch assembly 61 is integrally formed in the upper portion 38-2 of the slider member 38 so as to project outwardly through a rear opening formed in the housing 34. The pusher member 39 is arranged and constructed to engage the lighting switch 62 (the push button 62a) when the slider member 38 moves to the uppermost position.

Further, the lighting switch 62 thus arranged is electrically connected to the lamp 60 via a cable 64 so that the lamp 60 can be turned on and off when the lighting switch 62 is switched on and off.

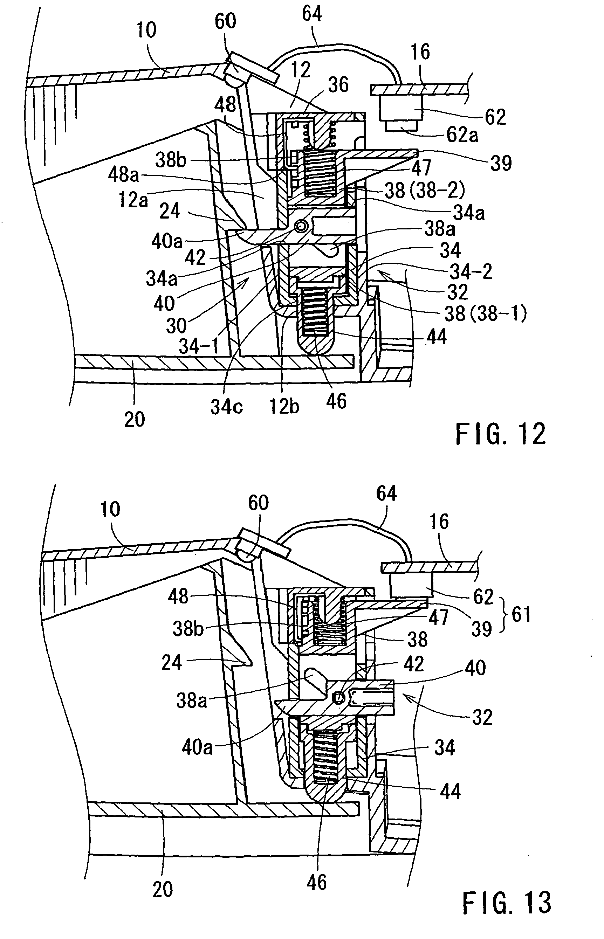

Switching operation of the lighting switch 62 according to this embodiment will be described below.
As shown in FIG. 13, when the box 20 is pushed into the casing 10 in order to unlock the lock mechanism 30, the slider member 38 is moved upwardly. When the slider member 38 is shifted to the uppermost position, the pusher member 39 formed in the slider member 38 engages the push button 62a of the lighting switch 62 so as to press the push button 62a. As a result, the lighting switch 62 is switched on so that the lamp 60 is turned on. Thereafter, as shown in FIG. 14, when the box 20 is opened, the pusher member 39 is disengaged from the push button 62a because the slider member 38 is moved downwardly to the upper position by the spring force of the second spring 47. However, the switch 62 remains switched on because it is an alternating-type switch. Therefore, the lamp 60 is kept turned on while the box 20 is opened. Thus, the box cavity may be effectively illuminated by the lamp 60 when the box 20 is opened. Therefore, at night a driver or a passenger can view the articles received in the box 20.

When the box 20 is again pushed into the casing 10 in order to relock the lock mechanism 30, as shown in FIG. 13, the slider member 38 is again moved upwardly. When the slider member 38 is shifted to the uppermost position, the push button 62a of the lighting switch 62 is again pressed by the pusher member 39. As a result, the lighting switch 62 is switched off so that the lamp 60 is turned off. Thereafter, when the pushing action against the box 20 is stopped so that the lock mechanism 30 is relocked, as shown in FIG. 12, the pusher member 39 is again disengaged from the push button 62a. However, the switch 62 remains switched off because it is an alternating-type switch. Therefore, the lamp 60 is kept turned off while the box 20 is closed.

According to the present embodiment, even when the box 20 is opened (FIG. 14), the lighting switch assembly 61 of the illuminating device can be completely concealed because the lighting switch assembly 61 is positioned within the reverse side of the casing 10. Therefore, the overhead console 1" may have a good appearance even when the box 20 is opened.

Various changes and modifications may be made to the representative embodiments without departing from the scope of the present invention. For example, in the third embodiment, the lighting switch 62 may be a momentary acting-type lighting switch (not shown) that can be switched on only when a push button is pressed. As will be recognized, in such a case, the lighting switch assembly must be designed such that the pusher member 39 can continue to press the push button of the lighting switch even when the slider member 38 is shifted to the upper position (i.e., even when the box 20 is opened). Such a design of the lighting switch assembly can be obtained by, for example, providing flexibility to the pusher member 39 and/or the switch retainer plate 16.

Representative examples of the present teachings have been described in detail with reference to the attached drawings. This detailed description is merely intended to teach a person of skill in the art further details for practicing preferred aspects of the present teachings and is not intended to limit the scope of the invention. Only the claims define the scope of the claimed invention. Therefore, combinations of features and steps disclosed in the foregoing detail description may not be necessary to practice the invention in the broadest sense, and are instead taught merely to particularly describe detailed representative examples of the invention. Moreover, the various features taught in this specification may be combined in ways that are not specifically enumerated in order to obtain additional useful embodiments of the present teachings.

## Claims

1. A storage device, comprising:
a base member;
a storage member movably disposed in a cavity of the base member so as to move between a closed position and an open position; and
a lock mechanism having an operation unit provided in the base member and an engagement portion provided in the storage member,
wherein the operation unit is disposed on a reverse side of the base member and includes a latch member that can move between an advanced position and a retreated position in response to the closing and opening operation of the storage member, and wherein the latch member is arranged and constructed to move to the advanced position so as to engage the engagement portion of the storage member only when the storage member is in the closed position.

2. The storage device as defined in claim 1, wherein the operation unit further includes a slider member that can slide in response to the closing and opening operation of the storage member so as to be respectively positioned in first and second positions, and wherein the latch member is arranged and constructed to move in synchronism with the sliding motion of the slider member.

3. The storage device as defined in claim 2, wherein the latch member is positioned in the advanced position when the slider member is in the first position, and wherein the latch member is positioned in the retreated position when the slider member is in the second position.

4. The storage device as defined in claim 2 or 3, wherein the operation unit further includes a spring biased actuator so that the slider member can be moved via the actuator when the storage member is closed and opened

5. The storage device as defined in claim 4, wherein the actuator is arranged and constructed to urge the storage member toward the open position when the storage member is in the closed position.

6. The storage device as defined in any of claims 2-5, wherein the latch member and the slider member are respectively received within a housing, wherein the operation unit further includes a cam pin attached to the housing and a cam member attached to the slider member, and wherein the cam pin is arranged and constructed to engage the cam member when the slider member is in the second position so as to retain the slider member in the second position.

7. The storage device as defined in any of claims 2-5, wherein the latch member and the slider member are respectively received within a housing, wherein the operation unit further includes a rotary cam assembly having a rotor and the circular cam that are attached to the slider member, and wherein the rotor is arranged and constructed to engage the circular cam when the slider member is in the second position so as to retain the slider member in the second position.

8. The storage device as defined in any of claims 1-7 further includes an illuminating device having a lighting source attached to the base member and a lighting switch disposed on the reverse side of the base member, wherein the lighting switch is arranged and constructed to be switched off and on in response to the closing and opening operation of the storage member.

9. The storage device as defined in claim 8, wherein the lighting switch is switched on when the storage member is in the open position.

10. The storage device as defined in claim 8, wherein the operation unit further includes a slider member that can slide in response to the closing and opening operation of the storage member so as to be positioned in first and second positions after the slider member is moved to a third position, and wherein the slider member engages the lighting switch when the slider member is moved to the third position so that the lighting switch can be switched on and off.

11. The storage device as defined in claim 10, wherein the lighting switch comprises an alternately acting-type lighting switch, wherein the lighting switch is switched on when the slider member moves to the third position from the first position, and wherein the lighting switch is switched off when the slider member moves to the third position from the second position.

12. The storage device as defined in claim 11, wherein the slider member is disengaged from the lighting switch when the slider member is in the first and second positions.
